# EUROPEAN PATENT SPECIFICATION

(11) **EP 3 037 998 B1**
(45) Date of publication and mention of the grant of the patent: **03.07.2019**
(21) Application number: 14307163.7
(22) Date of filing: 23.12.2014
(51) Int. Cl.: G06F 21/32

(54) **Method and system for providing secure and standalone-operable biometric authentication**
Verfahren und System zur Bereitstellung einer sicheren und eigenständig betreibbaren biometrischen Authentifizierung
Procédé et système permettant de fournir une authentification biométrique sécurisée et opérable de manière autonome

(43) Date of publication of application: 29.06.2016
(73) Proprietor: Intel Corporation, Santa Clara, CA 95052 (US)
(72) Inventor: Zhang, Lei, 13100 Aix-en-Provence (FR)
(74) Representative: Goddar, Heinz J.

(56) References cited:
- EP-A1- 2 164 019
- EP-A1- 2 813 961
- WO-A1-2014/146684

## Description

### TECHNICAL FIELD

Embodiments of the present disclosure relate to biometric authentication. More specifically, embodiments of the present disclosure relate to a method and system of providing secure and standalone-operable biometric authentication.

### BACKGROUND

With fraudulent activity on the rise, verifying a person's identity effectively and efficiently is becoming increasingly important. In some cases, an authentication process may allow a user to gain access to a system by utilizing a value known by a user (e.g., a password). In other instances, the user may use a badge, a smart card, or a one-time password token to gain access and prevent unauthorized access.

Near field communication (NFC) refers to a contactless short-range high frequency wireless communication technology developed to allow for two or more NFC-enabled devices to communicate wirelessly when in close proximate (e.g., several inches). The basic principle for NFC communication is magnetic induction. A NFC-enabled device emits a small electric current (typically pulsed), which creates a magnetic field that in turn bridges the physical space between all the NFC-enabled devices that are within the range of the magnetic field and try to exchange information. That field is received by a similar coil (also known as an antenna) of another NFC-enabled device within the range and is turned back into electrical impulses in the other NFC-enabled device. This allows information to be sent from one NFC-enabled device to the other.

WO 2014/146684 A1 describes an authentication system for authenticating a user at an electronic device. The system comprises a device-specific identifier operable to identify the respective electronic device. A biometric data sensor is operable to sample biometric data from the user and provide reference biometric data for the user. A storage unit is operable to hold the reference biometric data derived from the biometric data. A processor is operable to perform a one-way function (hash) on a data pair comprising the device identifier and the biometric data. The output of the one-way hash is a signature or authentication signal which is unique to the particular combination of device identifier and biometric data, the signal signifying that the authorized user is physically present at the respective electronic device to authenticate a transaction or other process.

EP 2 813 961 A1 describes a technique for biometric verification, wherein all biometric information used in biometric authentication of identity of a given user is retained in a user client and all transactions including the actual authentication process are conducted by the client. The biometric template used as a comparison reference during authentication is stored in encrypted form on the client. Encryption keys for encrypting biometric data at the client are stored in secure storage. Authentication is conducted using the encrypted biometric templates.

EP 2 164 019 A1 describes biometric processing using random projection transforms wherein the transformed biometric data can be used for authentication purposes. Each random projection transform provides a one-way or irreversible transformation such that the resulting transformed biometric data alone cannot be used to reconstruct the biometric data. Enrollment and backup transforms can be produced based on enrollment biometric data. Authentication is possible by similarly transforming authentication biometric and then securely reconstructing the enrollment and authentication biometric data for comparison.

### BRIEF DESCRIPTION OF THE DRAWINGS

The features and advantages of the disclosure are illustrated by way of example and are by no means intended to limit the scope of the disclosure to the particular embodiments shown.
Figure 1 is a block diagram of a secure and standalone-operable biometric authentication system according to an exemplary embodiment of the present disclosure.
Figure 2 illustrates in flow diagram form the authentication workflow of the secure and standalone-operable biometric authentication system of Figure 1 according to an exemplary embodiment of the present disclosure.
Figure 3 illustrates the structure of an authentication service module of the secure and standalone-operable biometric authentication system of Figure 1 according to an exemplary embodiment of the present disclosure.
Figure 4 illustrates the structure of an enrollment agent of the secure and standalone-operable biometric authentication system of Figure 1 according to an exemplary embodiment of the present disclosure.
Figure 5 illustrates in block diagram form the structure of an authentication agent of the secure and standalone-operable biometric authentication system of Figure 1 according to an exemplary embodiment of the present disclosure.
Figure 6 illustrates in flow diagram form the workflow of the enrollment agent of Figure 4 according to an exemplary embodiment of the present disclosure.
Figure 7 in flow diagram form the workflow of the authentication agent of Figure 5 according to an exemplary embodiment of the present disclosure.
Figure 8 is a block diagram of an exemplary computer system in which an exemplary embodiment of the present disclosure may reside.

### DESCRIPTION OF THE EMBODIMENTS

In the following description, for purposes of explanation, specific nomenclature is set forth to provide a thorough understanding of embodiments of the present disclosure. It will be apparent to one skilled in the art that specific details in the description may not be required to practice the embodiments. In other instances, well-known circuits, devices, and programs are shown in block diagram form to avoid obscuring embodiments of the present disclosure unnecessarily.

Biometrics refers to human physiological characteristics and traits that are distinctive and measureable. They can be unique or particular to an individual human being. They include, for example, finger prints, retina, palm veins, face geometry and recognition, DNA, palm prints, iris recognition, and hand geometry. When these human characteristics and traits of a live biometric sample are digitized (e.g., scanned) into electronic form, the distinctive characteristics and features are extracted from the digitized biometric sample into biometric digital traits or biometric template.

Biometric template can be used to identify, verify, or authenticate a human being. This is referred to as biometric authentication (or realistic authentication). Using biometric authentication, access control can be provided securely to a device or a system based on such verification, identification, or authentication. One prior biometric authentication system typically employs biometric database that stores the biometric templates of all the people the system needs to verify or authenticate. During authentication phase, a remote terminal captures a live biometric sample of a human being who needs to be authenticated by the system. The biometric sample is then converted into a biometric template and the biometric database is accessed via a network to search for a matching biometric template stored in the biometric database.

However, unlike other types of authentication systems or processes which can revoke prior issued security values or codes when the system is compromised (i.e., start over), a biometric authentication system cannot revoke biometric information it stores if the biometric information is compromised. The consequence of such a breach can be gravely severe if the system stores biometric information of a large number of people. Therefore, a prior biometric authentication system must either require significant resources to maintain its security against unauthorized access, or impose strict physical limitation (e.g., access via dedicated accessing terminals over closed secure network) on how the database can be accessed. Such a resource requirement or physical limitation prevents biometric authentication from being widely adopted.

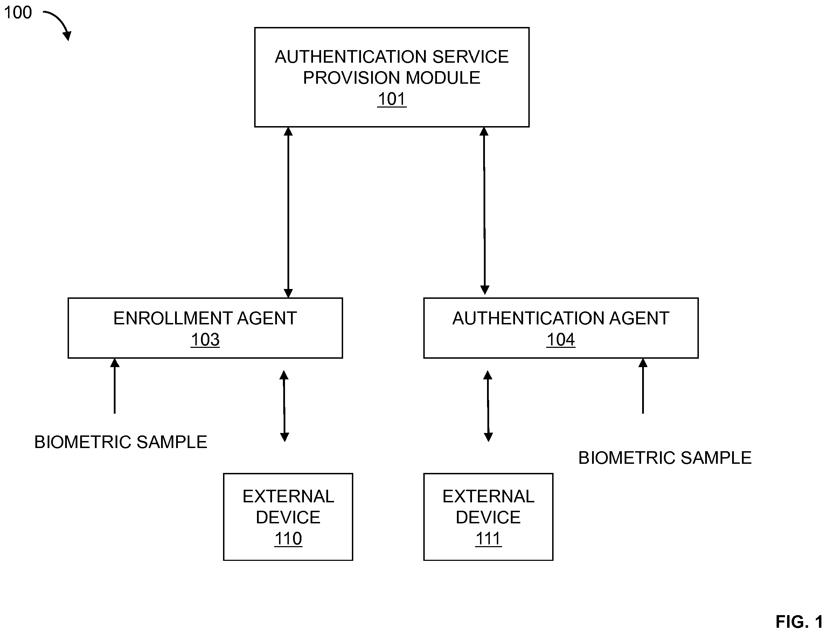

As will be described in more detail below and in accordance with embodiments of the present disclosure, a secure and standalone-operable biometric authentication arrangement or system (e.g., the biometric authentication system 100 of Figure 1) is provided that does not require a biometric database that stores biometric information of all the people the system needs to authenticate or verify, and does not require network connection to access to the biometric database. Instead, the biometric information of all the people is distributed among each of those people who have registered with the system. This means that each of those people who need to be authenticated by the system carries their own irreversibly converted and encrypted biometric template. During authentication, no biometric template needs to be transmitted among different modules or units of the biometric authentication system and no database access is needed to complete the biometric authentication. The biometric authentication system captures the person's biometric information "in live", meaning during authentication. The biometric authentication system also reads the irreversibly converted and encrypted biometric template from the person's electronic device. The biometric authentication system then verifies whether the live biometric sample matches the irreversibly converted and encrypted biometric template presented by the person.

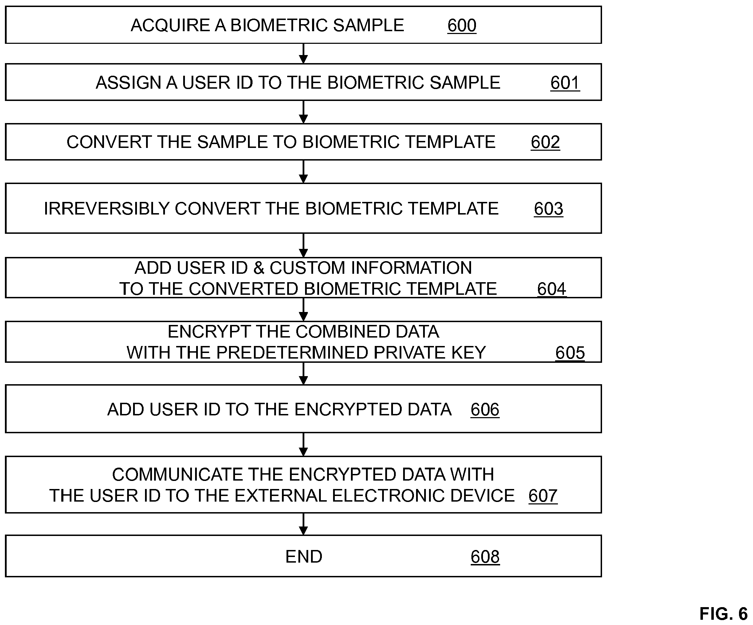

Specifically, there are two phases of the system. During the first phase (i.e., enrollment phase) of the biometric authentication, the biometric authentication system takes the live biometric sample of a person and converts it into an irreversibly converted (e.g., hashed) biometric template. A UID (User ID or User Identification number) is assigned to the person and appended to the converted or hashed biometric template, the combined data (converted biometric template + UID) is then encrypted using a private key assigned or mapped to the UID as encrypted biometric template. The encrypted data (i.e., the converted biometric template + UID) is then appended again with the UID and stored in that person's electronic device (also see Figure 6). There are many different implementations of the electronic device that can be used to store the converted and encrypted biometric template. For example, the device can be a NFC (Near Field Communication)-enabled device or a plastic card with an embedded NFC antenna.

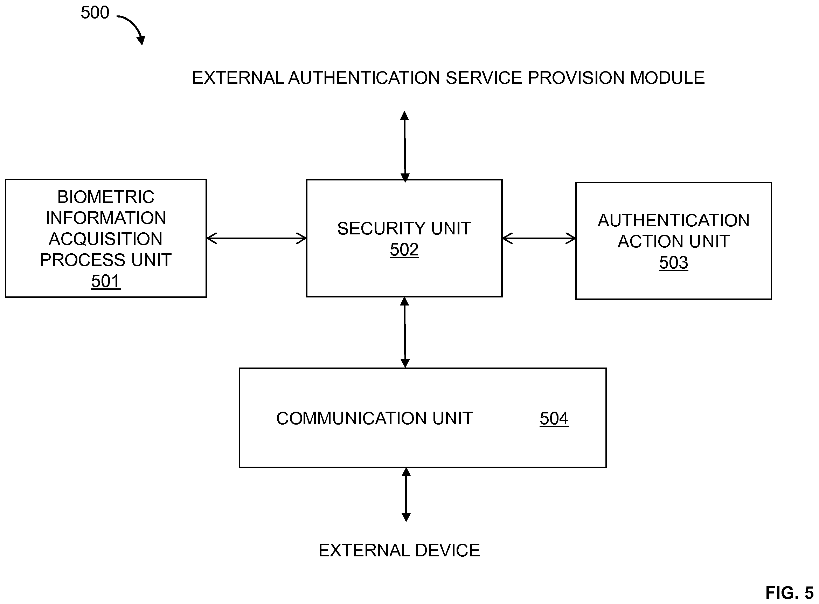

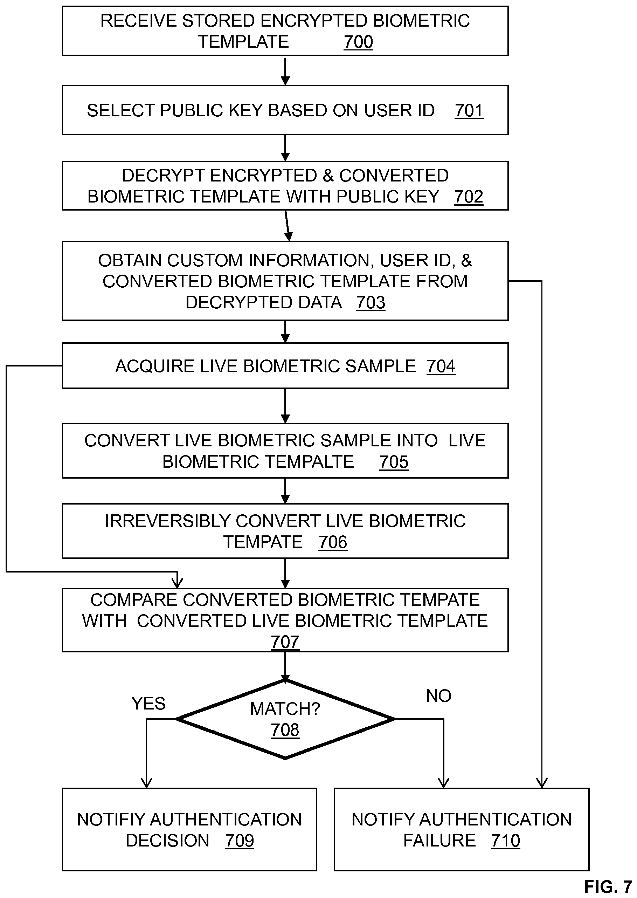

During the second phase (i.e., authentication phase) of the biometric authentication, the user's biometric template is captured in live and is irreversibly converted (with the same irreversible conversion function during enrollment) as converted live biometric template; the biometric authentication system reads user's stored encrypted biometric template from user's electronic device. The encrypted biometric template is decrypted by the corresponding public key, and then the converted biometric template during enrollment is obtained. An authentication decision is then made based on the two converted biometric templates to authenticate the user. The biometric authentication system may employ different approaches that analyze the converted biometric template obtained during enrollment and the converted live biometric template during authentication to make authentication decision. These approaches are described below, also in conjunction with Figures 5 and 7.

One advantage of the above described implementation is that no biometric information or biometric template of any person is stored anywhere in the biometric authentication system. The converted and encrypted biometric template is stored in the person's own electronic device that is not part of the biometric authentication system. The electronic device is carried by and associated with the person. As a result, the system is secure and requires no system resource to maintain security of the stored and converted biometric template.

Another reason that the biometric authentication system is secure is that the biometric authentication system irreversibly converts and encrypts (with service provider's private key) the biometric template of a person before the biometric template is sent to and stored in the person's electronic device. This means that the stored data is the irreversibly converted and encrypted result of the biometric template, not the biometric template itself (alternatively, only irreversible conversion is required). Therefore, if the stored encrypted biometric template is compromised, the biometric template cannot be deduced. In addition, if the biometric information is comprised, the encrypted biometric template cannot be correctly reproduced by an attacker because the service provider's private key is unknown to the attacker. If both the stored encrypted biometric template and user's biometric information are compromised, the authentication system can still simply revoke the original UID of the user, and put it in a "black list" in the authentication agent. The authentication system then assigns the user a new UID. This new UID participates in generating new authentication data with service provider's private key mapped to the new UID, and then the new resulted authentication data is written to user's electronic device. During authentication phase, the attacker cannot pass the authentication since the original UID decrypted from the compromised authentication data is revoked and in the blacklist, and the attacker is not able to reproduce the new authentication data without service provider's private key.

Another advantage of the above described implementation is that no database that centrally stores biometric information is required in the authentication system. This also eliminates the need to transmit biometric information to and from the central biometric information database. This makes the authentication module of the system capable of operating in a standalone fashion during authentication because to complete the authentication task, the authentication module only needs to capture in live the user's biometric information and receive the stored encrypted biometric template from the person who needs to be authenticated, and then analyze them to determine if they belong to the same person. In other words, the biometric authentication system is standalone-operable.

Another advantage of the above described implementation is that because there is no biometric database, infrastructure requirement to ensure secure access of the system is relaxed, thus allowing the system to be implemented cost-effectively and efficiently. Since no biometric database is required to store any biometric information, no network deployment to connect various modules of the system during liver authentication operation is required. The above described implementation offers a simple and secure way to carry out biometric authentication. The above described implementation will be described in more detail below, also in conjunction of Figures 1-8.

Throughout the specification, the following terms are defined as follows.

The term "UID" or "User ID" refers to user identification number uniquely attributed or assigned to a valid user (e.g., an ID number).

The term "biometric information" hereinafter refers to measureable physiological characteristics that can be unique to an individual human being. They may include, but not limited to, finger prints, retina, palm veins, face geometry and recognition, tooth geometry, DNA, palm prints, iris geometry and recognition, hand geometry, and odor/scent.

The term "live biometric sample" refers to a biometric sample taken in live during the enrollment or authentication phase. Depending on the type of the biometric information being captured, there are many ways of taking or capturing the live biometric sample of a person. For example, a person's finger prints can be captured by a scanner. A camera can be used to capture a person's face geometry, retina, or iris geometry and recognition.

The term "biometric template" hereinafter refers to the captured live biometric sample that is digitized into electronic form, with the distinctive characteristics and features extracted from the captured biometric sample into biometric digital traits. Biometric templates can be used to identify, verify, or authenticate a human being.

The term "irreversibly converting", "irreversibly convert", or "irreversible conversion" refers to a one-way data conversion that cannot be reversibly inverted. One example of irreversible conversion is one-way hashing. The term "hash" or "hashing" refers to irreversible cryptographic hash function (or simply irreversible encryption/calculation). A hash function is any function that maps digital data of arbitrary size to digital data of fixed size, with slight difference in input data producing significant differences in output data. The values returned by an irreversible conversion function are referred to as hash values, has codes, hash sums, or simply hashes. Hash includes cryptographic hashing. A cryptographic hash function is considered practically impossible to invert. Inversion means to recreate the input data from its hash value alone, thus making it a one-way hash function. Cryptographic hash functions have many information security applications, notably in digital signatures, message authentication codes, and other forms of authentication. Moreover, the term "hash" also refers to any other types of irreversible encryption (or irreversible calculation). An irreversible encryption transforms data deterministically to a form from which the original data cannot be recovered. The resulted data may, or may not, have a fixed data size. Thus the term "hash" and "irreversible conversion" may be used interchangeably hereinafter.

Public/private key cryptography, also known as asymmetric cryptography, is a class of cryptographic algorithms which requires a pair keys (two separate keys), one of which is private key and one of which is public key. A message encrypted with private key can only be decrypted by the paired public key.

The term "converted biometric template" refers to the results after irreversibly converting a biometric template during enrollment. The term "encrypted biometric template" refers to the encryption date resulted from encrypting a converted biometric template by service provider's private key during enrollment. The term "converted live biometric template" refers to the results after irreversibly converting a live biometric template during authentication.

The term "electronic device" refers to any type of electronic device (or card with an embedded IC (integrated circuit) chip or microchip) with communication capability with external devices. For example, the electronic device can be a smart phone, a tablet, a computer, an electronic watch, a digital camera, or a personal digital assistant. As a further example, the electronic device can be a badge (or a card) with an embedded IC chip or microchip. The electronic device can also be a smart card. The communication capability the electronic device adopts can be wireless or wire-line communication technology. For example, the communication capability can be Bluetooth, Wi-Fi, or NFC wireless communication.

The term "NFC" refers to near field communication. It is a contactless short-range high frequency wireless communication technology that allows for two or more NFC-enabled electronic devices to communicate (e.g., transfer of data such as text and/or numbers) wirelessly when in close proximate (e.g., several inches). In one embodiment, NFC is based on radio frequency identification (RFID) standards. The basic principle for NFC communication is magnetic induction.

The term "NFC-enabled device" refers to any electronic device (or card) that is able to store data via NFC communication. For example, a NFC-enabled device can be a smart phone, a tablet, or a computer with NFC communication capability. As a further example, a NFC-enabled device can be a physical object in the form of a tag, a band, a ring, or a card, each with a NFC communication chip sealed or embedded in the tag, band (e.g., wristband), ring, or card, respectively. The chip or microchip has a nonvolatile memory for storing data and an antenna. These NFC-enabled tag, band, ring, or card can also be collectively referred to as NFC terminal. A NFC terminal generally does not require battery for it to work as it can get its power from just being near a powered NFC-enabled device (e.g., a smart phone), but may include a battery. In this disclosure, the communication between two NFC devices includes all the possible communication modes including, for example, NFC Read/Write mode, NFC Peer to peer mode and NFC Card emulation mode.

The term "standalone-operable" refers to the fact that because the biometric authentication system does not require a central database (as well as network connecting to it) to store any biometric information or biometric template for authentication, various parts or functions of the system (e.g., enrollment or authentication) can function independently to accomplish their assigned tasks without requiring the other parts to function at the same time (i.e., off-line operation). For example, during enrollment phase, the enrollment module of the authentication system captures and issues a converted and encrypted biometric template to the person's electronic device. The only communication it needs to have with other parts of the system is to obtain service provider's private keys. That can be done earlier (i.e., pre-loaded or pre-installed into the enrollment module/agent). This is also true during the authentication phase, at which the authentication module/agent of the system decrypt the stored encrypted biometric template to analyze and make an authentication decision. The communication it needs to have with other parts of the system is to obtain the corresponding public keys. Again, this can be done earlier (i.e., pre-loaded or pre-installed into the authentication module) or periodic maintenance.

The term "network" refers to a computer or data network. It is a collection of data processing systems interconnected by communication channels that allow sharing of resources and information. It is a network to transmit data among different devices and/or systems connected to the network. One example of such a network is the Internet. Another example is a secure and dedicated communication channel between any two devices.

The term "computer", "computing system", or "computing hardware" refers to an electronic computing or data processing system that includes a processor, a memory, a mass storage device, and an operating system.

The term "processor" refers to a data processing circuit that can be a microprocessor, a co-processor, a microcontroller, a microcomputer, a central processing unit, a field programmable gate array (FPGA), a processing element of a FPGA, a programmable logic circuit, and/or any circuit that manipulates signals (analog or digital) based on operational instructions that are stored in a memory.

The term "memory" refers to a storage circuit or multiple storage circuits such as read-only memory, random access memory, volatile memory, non-volatile memory, static memory, dynamic memory, flash memory, cache memory, and/or any circuit that stores digital information.

In general, schematic elements used to represent instruction blocks may be implemented using any suitable form of machine-readable instruction, such as software or firmware applications, programs, functions, modules, routines, processes, procedures, plugins, applets, widgets, code fragments and/or others, and that each such instruction may be implemented using any suitable programming language, library, application programming interface (API), and/or other software development tools. For example, some embodiments may be implemented using Java, C++, and/or other programming languages. Similarly, schematic elements used to represent data or information may be implemented using any suitable electronic arrangement or structure, such as a register, data store, table, record, array, index, map, tree, list, graph, file (of any file type), folder, directory, database, and/or others.

Further, in the drawings, where connecting elements, such as solid or dashed lines or arrows, are used to illustrate a connection, relationship or association between or among two or more other schematic elements, the absence of any such connecting elements is not meant to imply that no connection, relationship or association can exist. In other words, some connections, relationships or associations between elements may not be shown in the drawings so as not to obscure the disclosure. In addition, for ease of illustration, a single connecting element may be used to represent multiple connections, relationships or associations between elements. For example, where a connecting element represents a communication of signals, data or instructions, it should be understood by those skilled in the art that such element may represent one or multiple signal paths (e.g., a bus), as may be needed, to effect the communication.

As can be seen from Figure 1, the biometric authentication system 100 includes an authentication service provision module 101, an enrollment agent 103 operationally or communicatively connected to the authentication service provision module 101, and an authentication agent 104 operationally or communicatively connected to the authentication service provision module 101. In one embodiment, the operational or communicative connection between the agents 103-104 and the authentication service provision module 101 is provided asynchronously via pre-installs or pre-downloads via storage media transfer (e.g., by mobile memory storage) carried out by human operators. In another embodiment, the connection between the agents 103-104 and the authentication service provision module 101 is provided by a secure and dedication physical communication channel. In a further embodiment, the connection between the agents 103-104 and the authentication service provision module 101 is provided by a communication network (e.g., the Internet). In this case, each of the components 101 and 103-104 includes network communication capability.

Each of the components 101 and 103-104 includes both computer hardware (e.g., processor and memory) and software. Moreover, each of the enrollment and authentication agents 103-104 includes communication capability (wired or wireless) to communicate with external electronic devices.

In one embodiment, each of the enrollment and authentication agents 103-104 includes NFC communication capability to communicate with external electronic devices. In another embodiment, each of the enrollment and authentication agents 103-104 communicates with external electronic devices via other wireless communication technologies (e.g., Bluetooth or Infrared, etc.).

The authentication service provision module 101 can also be referred to as authentication service provision sub-system. The authentication service provision module 101 is a secure environment (e.g., a secure server, Trust Zone, Trusted Execution Environment, Secure Element, etc.) to generate public/private key pairs, as well to map a public/private key pair to a UID.

According to requirement imposed by the service provider of the system 100, M (M∈ [1, +∞ [) pairs of private/public keys can be generated by the module 101, each private/public key pair can be flexibly assigned for each user, or for N users, or for users in one or several specific authentication agent site(s), or for users in specific group(s), or for all the enrolled users, etc. The authentication service provision module 101 can flexibly define the mappings between UIDs and encryption keys. The authentication service provision module 101 provides the private key and lists of mapping of UID to private key to the enrollment agent 103. The authentication service provision module 101 provides the public keys and lists of mapping of UID to public key to the authentication agent 104.

In one embodiment, the authentication service provision module 101 pre-loads or pre-installs the private keys and the UID to private key mappings in a security unit (not shown in Figure 1) of the enrolment agent 103. In this embodiment, the authentication service provision module 101 also pre-loads or pre-installs the public keys and UID to public key mappings in a security unit (not shown in Figure 1) of the authentication agent 104. This allows each of the enrollment agent 103 and the authentication agent 104 to be standalone-operable without connecting to the authentication service provision module 101 during operation.

The pre-load or pre-installation of encryption keys and mappings can be done without network (e.g. information copied via a secure mobile storage device) among the modules 101 and 103-104, which can make module 101 totally disconnected from any outside network to reduce security risks. In another embodiment, the authentication service provision module 101 is deployed in the enrollment agent 103 and is physically disconnected to any outside network. In another embodiment, the authentication service provision module 101 is connected to the modules 103-104 periodically via secure networks to load/update the encryption keys and mappings (e.g. update once per-month or per-year).

As described above, the biometric authentication system 100 authenticates people (or users of the system) based on their biometric information. To accomplish this, the biometric authentication system 100 needs to enroll those people by taking their biometric information first. This is accomplished by the enrollment agent 103. The enrollment agent 103 assigns a valid UID (User ID) to a user, and captures the user's biometric sample, converts it into a biometric template, and irreversibly converts it into a converted biometric template. The converted biometric template is then appended with a UID of the person (unique ID to the person) and some custom information, and the resulted data (i.e., converted biometric template plus UID and custom information) is then encrypted with the private key associated with the UID. The private key is chosen based on the UID to private key mapping.

The enrollment agent 103 then stores the encrypted data (again appended with UID) that contains the converted biometric template and UID and custom information in an external electronic device 110 associated with the person from whom the biometric sample is taken. Here, UID is appended twice, once to the converted biometric template and the second time to the encrypted data. The storing is achieved by communicating the encrypted data to the external device 110. This communication can be done using many different communication techniques (e.g., wired or wireless). In one embodiment, the communication technique employed to communicate the data to the external electronic device 110 is NFC wireless communication. In this case, the external electronic device 110 is an NFC-enabled device. The stored data in the external electronic device 110 can be later accessed for authenticating the person during an authentication phase. The stored data in the external electronic device 110 is called stored encrypted biometric template.

After enrollment, a person who has been enrolled in the biometric authentication system 100 can be authenticated by the system. This is accomplished by the authentication agent 104. The authentication agent 104 authenticates any person or user who needs to be authenticated or verified by the biometric authentication system 100. This is done by the user presenting (1) a live scanning of user's biometric sample and (2) the encrypted data stored in an electronic device (e.g., the device 111 as shown) associated with the user during enrollment of the user. As described above, the encrypted data includes the converted biometric template of the user and the assigned UID of the user and some custom information. The authentication agent 104 decrypts the encrypted data to obtain the UID and the converted biometric template. The authentication agent 104 also irreversibly converts the live biometric sample into a converted live biometric template using the same conversion or hash function that converts the converted biometric template during enrollment. The authentication agent 104 then analyzes the two templates (namely the converted biometric template and the converted live biometric template) to determine if they belong to the same valid user in order to make an authentication decision. The authentication agent 104 and all the modules in the system do not store any biometric information or biometric template during the enrollment and authentication, thus making the system secure and hacking-proof.

As described above, the biometric authentication system 100 does not store any person's biometric information in the system. This is due to the fact that during enrollment, a person's biometric information is captured, irreversibly converted, encrypted, and stored back in the person's electronic device. The person's biometric information is not otherwise stored in the biometric authentication system 100. During the authentication phase, the biometric authentication system 100 captures the user's biometric information in live and reads the stored encrypted biometric information from the user's electronic device (i.e., the device 110 or 111). The biometric authentication system 100 then authenticates the person by analyzing and verifying the acquired data.

In an alternative embodiment, irreversible conversion is performed in enrollment and authentication agents 103-104, and encryption and decryption are performed in the module 101. In this case, the module 101 is connected with the agents 103-104 via secure communication channels.

The biometric authentication system 100 has the following advantages. First, no biometric information or biometric template is stored anywhere. Secondly, the authentication system 100 can run in standalone mode and no network or database infrastructure is required. Thirdly, biometric information or biometric template cannot be reversely deduced in any way. Fourthly, biometric information or biometric template information disclosure does not result in authentication acceptance to attacker. Moreover, encrypted biometric template (stored in external device) disclosure does not result in authentication acceptance to attacker. Furthermore, even both the biometric information and the encrypted biometric template were disclosed, service provider can easily revoke the original UID of the user to guarantee the authentication security.

In another embodiment, if the user's handset electronic device is able to scan the biometric information (e.g. fingerprint), the user's biometric template can be acquired and converted via a service provider's custom application installed in the handset electronic device, and the converted template is transferred to the enrollment agent 103 via a network. The enrollment agent 103 assigns the user an UID and generates the encrypted biometric template and sends it back to user's handset device. The encrypted biometric template can be stored in the handset device for future authentication if this handset device supports communication with the authentication agent 104. Alternatively, the encryption data can be written by the handset device to an NFC-enabled device (e.g., NFC tag, NFC ring, etc.) which serves for future authentication.

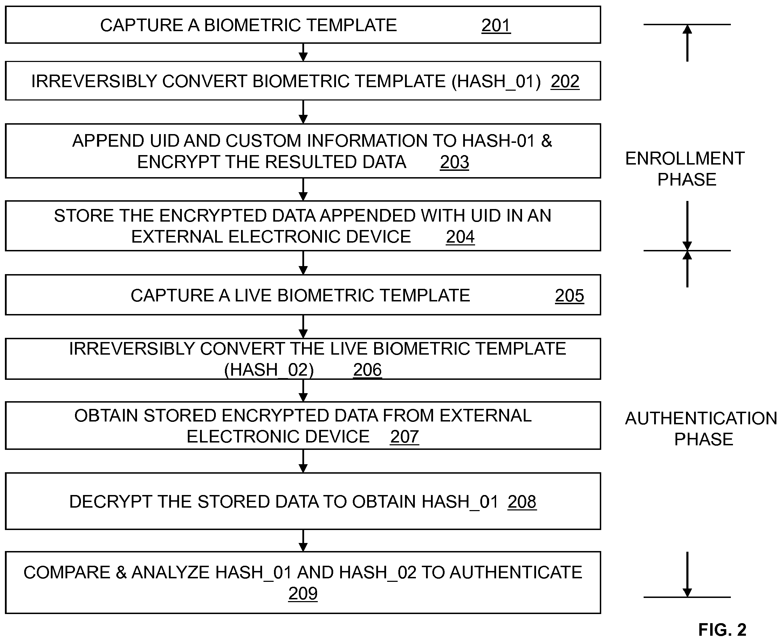

Figure 2 illustrates a biometric authentication procedure according to an exemplary embodiment of the present disclosure. The procedure shown in Figure 2 is performed by a biometric authentication system (e.g., the biometric authentication system 100 of Figure 1) to authenticate a person (or persons) using their biometric information. The procedure includes an authentication enrollment phase and an authentication phase. During the enrollment phase, a person's biometric information is captured and irreversibly converted. The converted data is referred to as "HASH_01" (note: HASH_01 may or may not be generated via hash function. It can be generated by any custom defined irreversible conversion). HASH_01 is then appended with the user's UID and any custom information. The custom information is optional and is used to specify access privileges associated with the user ID. The custom information can include, for example, access conditions, access period window information, and other user-specific information.

The resulted data (i.e., HASH_01 plus UID and custom information) is then encrypted with service provider's private key, and the encrypted data appended with UID is then stored in the person's electronic device for later use during authentication. The person's biometric information is not otherwise stored in the biometric authentication system.

During the authentication phase, the biometric information of the person who needs to be authenticated is captured live. This live captured biometric information is converted to live biometric template, which is then irreversibly converted (e.g., hashed). The irreversibly converted data is referred to as HASH_02.

In addition, the person who needs to be authenticated by the biometric authentication system also presents the electronic device that stores the stored encrypted data of the converted biometric template of the person obtained during the enrollment phase. The encrypted biometric template is then decrypted by service provider's public key (selected based on the UID appended to the encrypted data), and then the converted biometric template during the enrollment phase (i.e., "HASH_01") is retrieved. The biometric authentication system then authenticates the person by analyzing the HASH_01 and HASH_02 to determine if they belong to the same person to make an authentication decision.

However, even for the same valid user, the biometric information respectively captured during the enrollment and authentication can be slightly different, which may result in two completely different converted data (HASH_01 and HASH_02). Two approaches are envisaged to make an authentication based on these two converted results.

In one embodiment, the approach is to bypass the problem resulted from the fact that the two captured biometric template (and the two converted data) can be different. It is based on the condition that HASH_01 and HASH_02 must be identical to pass the authentication. Let us define P as the probability that HASH_01 and HASH_02 are identical for the same valid user. Fuzzy methods can be employed to guarantee that the probability P surpasses a defined threshold to ensure the good usability of the system. In one embodiment, to accomplish the above described, only limited and highly discriminative biometric characteristics that are most likely to be accurately acquired by biometric scanning equipment are used to generate biometric template by employing possibly some fuzzy mechanisms. For example, these limited biometric characteristics can be, in case of fingerprint authentication, fingerprint global patterns/types, the number of the endpoints/bifurcations in a small defined circle zone around the core point of fingerprint, or the rounding/fuzzy distances in sort from the core point to endpoints/bifurcations or highly discriminative feature points in this circle. This can significantly increase the probability P that the two acquired biometric templates during the enrollment and authentication are identical. However, this may result such that one biometric template can match multiple persons' biometric information. The authentication is also protected by encryption, which is mapped to the person's UID. Therefore, the authentication is not made even if an attacker's biometric template matches a valid user's biometric template. In practical scenarios, the global authentication security can still be guaranteed even if the biometric template loses the uniqueness feature to some extent. This is referred to as approach one.

In another embodiment, the approach is based on the fact that the authentication agent can still accurately identify and authenticate a valid user even if HASH_01 and HASH_02 are different. In this case, special hashing scheme is employed to generate a set of localized hashed biometric minutia data based on the captured biometric information. Authentication decision can be made according to a match score which is estimated by analyzing and comparing a set of localized hashes which correspond to the localized sets of biometric minutia (in this case, HASH_01 and HASH_02 are respectively a set of localized hash data). This allows for comparison to be made at localized level during authentication and an overall comparison score can be obtained, thus avoiding the binary comparison decision. If the score exceeds a predetermined threshold, then the matching can be declared. This is referred to as approach two.

The procedure as shown in Figure 2 starts at 201 to capture a biometric sample from a user (who needs to be enrolled) into a biometric template. In one embodiment, fuzzy methods are employed to process only limited and highly discriminative biometric characteristics that are most likely to be accurately acquired by biometric scanning equipment to generate the biometric template (approach one), and then at 202, the biometric template is irreversibly converted as HASH_01. In another embodiment, the biometric template is generated to include a set of localized biometric information. The set of localized biometric information can be irreversibly converted using a special hashing scheme to generate a set of localized hashed biometric minutia data (approach two). In this case, HASH_01 at 202 represents a set of hash data.

At 203, the converted biometric template is appended with UID and custom information, and the resulted data is then encrypted by the private key selected based on the UID to private key mapping from the UID/private key mapping list.

At 204, the encrypted data is appended with the UID again. That data is then stored in the external electronic device associated with the person from whom the biometric template is captured.

At 205 at which the authentication phase starts, a live biometric sample of the person who needs authentication is captured and turned into a live biometric template.

At 206, the same irreversibly conversion function or irreversible calculation function (e.g., hash function) irreversibly converted the biometric template of the person during enrollment is used to irreversibly convert the live biometric template as HASH_02.

At 207, the encrypted biometric template with the appended UID that has been stored in the external electronic device is also obtained by the authentication agent.

At 208, the stored encrypted data is decrypted by the public key selected based on the UID public key mapping from the mapping list stored in the authentication agent, and HASH_01 is retrieved.

At 209, the authentication agent analyzes the two converted biometric templates (i.e., HASH_01 and HASH_02) to determine if the person is authenticated.

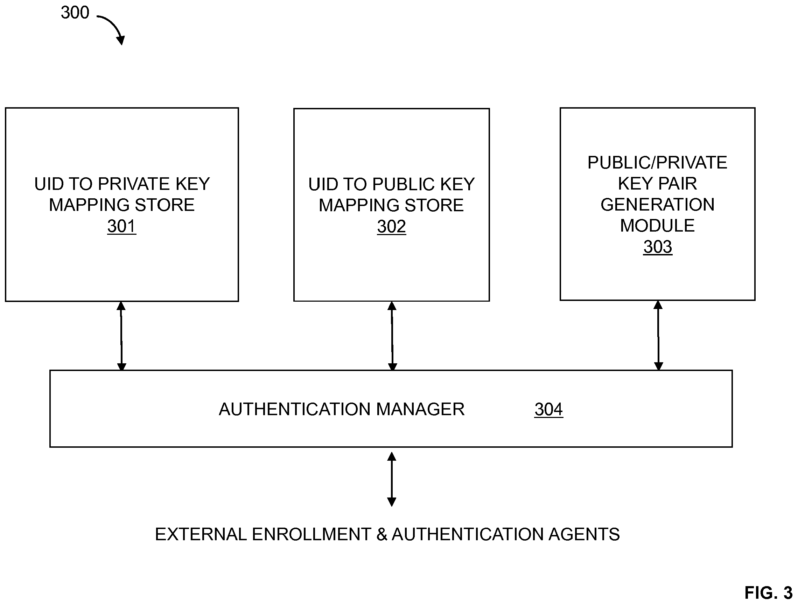

Figure 3 illustrates in block diagram form the structure of an authentication service provision sub-system 300 of a biometric authentication system according to an exemplary embodiment of the present disclosure. The authentication service provision sub-system 300 can implement the authentication service provision module 101 of Figure 1.

As can be seen from Figure 3, the authentication service provision sub-system 300 is a secure environment which is able to generate public/private key pairs (i.e., the public/private key generation module 303). The sub-system 300 also includes a UID to private key mapping store 301 which defines and stores lists of UID to private key mappings for the external enrollment agent (not shown in Figure 3). The sub-system 300 also includes a UID to public key mapping store 302 which defines and stores lists of UID to public key mappings for the external authentication agent (not shown in Figure 3). Therefore, each of the stores 301-302 is arranged as a lookup table. The modules 301-303 are connected to an authentication manager 304, which communicatively interacts with external enrollment and authentication agents to provide the public/private key pairs, the UID to private key mappings, and the UID to public key mappings. All of the modules 301-304 can be implemented in hardware, software, or firmware fashion, and can be implemented using known means.

In one embodiment, the public/private key pairs and the UID to private/public key mappings stored in the sub-system 300 are transferred to the external enrollment or authentication agent via a secure mobile storage (e.g., a secured USB key) (not shown in Figure 3). In another embodiment, the encryption keys and the mappings stored in the sub-system 300 are transferred to the external enrollment or authentication agent via a secure network (not shown). In another embodiment, the sub-system 300 can be deployed in a security unit of the enrollment agent. In this case, the enrollment agent is communicatively connected to the authentication agent.

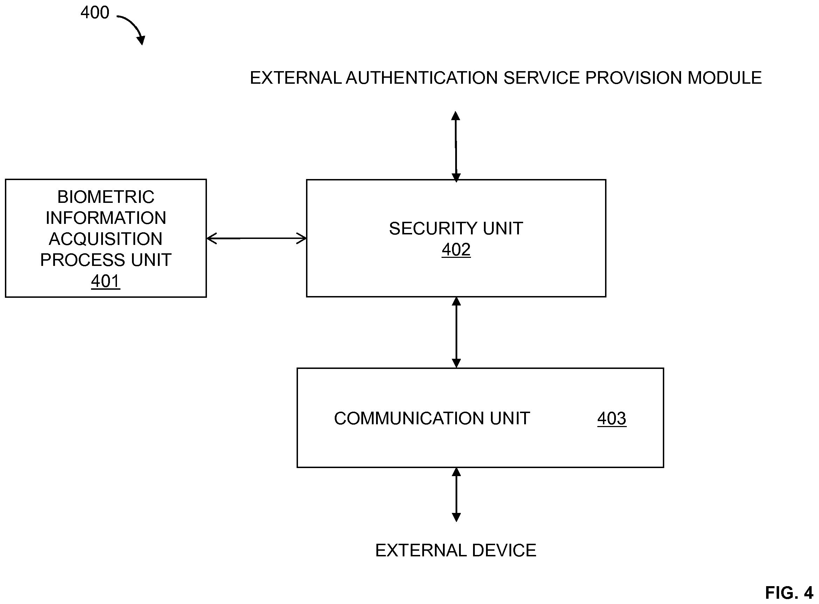

Figure 4 illustrates in block diagram form the structure of an authentication enrollment sub-system 400 of a biometric authentication system according to an exemplary embodiment of the present disclosure. The authentication enrollment sub-system 400 can implement the enrollment agent 103 of Figure 1.

As can be seen from Figure 4, the enrollment sub-system 400 is employed to enroll any person or user who needs to be authenticated or verified by the biometric authentication system. Enroll or enrollment here refers to the action that takes the person's biometric sample into a biometric template, irreversibly converts it, encrypts the converted data, and stores it back to the person's electronic device so that when the person needs to be authenticated by the biometric authentication system (i.e., the authentication agent of the biometric authentication system), the biometric authentication system can have its authentication agent or sub-system authenticate the person by taking both the person's live biometric sample and the stored encrypted data that includes the converted biometric template from the external electronic device.

The enrollment sub-system 400 includes a biometric information acquisition and process unit 401, a security unit 402, and a communication unit 403. The security unit 402 is connected to the other units. The communication unit 403 communicates with the external electronic device (not shown). In one embodiment, the security unit 402 is communicatively or operationally connected to the external authentication service provision module (not shown). In this case, the security unit 402 receives or retrieves data from the external authentication service provision module by secure mobile storage. In another embodiment, the security unit 402 is communicatively connected to the external authentication service provision module via a network or a dedicated communication channel.

The biometric information acquisition and process unit 401 is employed to acquire the biometric sample from the person or user who needs to be enrolled in the biometric authentication system. The person also carries with him/her the electronic device that is external to the enrollment sub-system 400. The biometric sample is turned into a biometric template. The biometric template is then irreversibly converted, encrypted, and then stored in the external electronic device associated with the person for later authentication.

During operation, the biometric information acquisition and process unit 401captures a biometric sample, and assigns a user ID (UID) to the biometric sample. The biometric information acquisition and process unit 401 then converts the acquired biometric sample into a biometric template. In one embodiment, the processing in the biometric information acquisition and process unit 401 is based on the approach one (i.e., fuzzy scheme) described above, in conjunction with Figures 1-2. The biometric template and its associated UID are then sent to the security unit 402.

The security unit 402 irreversibly converts the biometric template into a converted biometric template using a predetermined irreversibly conversion function. In one embodiment, the security unit 402 employs the predetermined irreversibly conversion function to irreversibly convert all the biometric templates the sub-system 400 receives. In another embodiment, the security unit 402 converts each of the biometric templates it receives with its own corresponding irreversibly conversion function based on its assigned UID (i.e., each UID has its corresponding assigned irreversibly conversion function).

In one embodiment, the security unit 402 irreversibly converts the entire biometric template using the predetermined irreversibly conversion function. In another embodiment, the security unit 402 employs special hashing scheme to generate a set of localized hashed biometric minutia data based on the captured biometric information. Authentication decision can then be made according to a match score which is estimated by analyzing and comparing a set of localized hashes which correspond to the localized sets of biometric minutia. This allows for comparison to be made at localized level during authentication and an overall comparison score can be obtained, thus avoiding the binary comparison decision. If the score exceeds a predetermined threshold, then the matching can be declared. This is referred to as approach two above.

The security unit 402 adds the user ID and custom information to the converted biometric template. The custom information is optional and is used to specify access privileges associated with the user ID. The custom information can include, for example, access conditions, access period window information, and other user-specific information.

The security unit 402 employs the private key associated with the UID assigned to the user to encrypt the combined data, and generate the encrypted biometric template. This private key is found via the UID to private key mappings. A private key can be used for multiple users, and for a given UID, there is only one unique private key generated by the authentication system. In one embodiment, the private keys and the mapping table have already been transferred from the authentication service provision module (e.g., the module 101 of Figure 1 or the sub-system 300 of Figure 3 via a mobile secure memory storage or via secure networks), and are pre-loaded or pre-installed in the security unit 402 such that the enrollment sub-system 400 can operate without having access to the authentication service provision sub-system during operation (i.e., standalone-operable). In another embodiment, the authentication service provision module is implemented in the security unit 402. In this case, the private key is selected directly in the module 402.

The security unit 402 then adds the user ID again to the encrypted biometric template. The final data package is then sent to the communication unit 403. The communication unit 403 then communicates the data package (i.e., the encrypted biometric template of the person + UID) to the external electronic device associated with the person for storing in the external electronic device. This communication can be done using many different communication techniques (e.g., wired or wireless). In one embodiment, the communication technique employed to communicate the data to the external electronic device is NFC wireless communication (the communication mode includes, for example, NFC Read/Write mode, NFC Peer to peer mode and NFC Card emulation mode). In this case, the external electronic device is an NFC-enabled device. The stored data in the external electronic device can be later accessed for authenticating the person during an authentication phase.

The enrollment sub-system 400 does not store or send any biometric information (i.e. captured biometric example, biometric template or the encrypted biometric template) to any module of the biometric authentication system. This makes the biometric authentication system to which the enrollment sub-system 400 belongs both secure and hacking-proof.

As described above, the external electronic device (not shown in Figure 4) can be an electronic device (e.g., a smart phone, a tablet, a computer, an electronic watch, a digital camera, or a personal digital assistant), a data processing device, or a badge (or a card) with an embedded IC chip or microchip. The electronic device can also be a smart card. In one embodiment, the electronic device is a data processing device or a badge (or a card) with an embedded IC chip or microchip, or a smart card. In this case, all the units 401-403 of the sub-system 400 are not implemented in the external electronic device. In another embodiment, the external electronic device is an electronic device (e.g., a smart phone, a tablet, a digital camera, or a computer system) with biometric information acquisition means. In this case, the unit 401 of the enrollment sub-system 400 can be located or implemented in the electronic device physically separate from the security unit 402 while the communication unit 403 may be eliminated, for example, the generation of biometric template as well as the irreversible converted biometric template can be done via a service provision application in the external electronic device. The irreversible converted biometric template can then be transferred to the security unit of the enrollment agent 402 via network for encryption. The encrypted biometric template can be finally received from the enrollment agent to the external device via network. This is normally used for remote enrollment embodiment. In this case, if the external electronic device is not used to store the encrypted biometric template, then an additional external electronic device (usually a badge or a card) is used to store the encrypted data; otherwise, this external device can be used directly during the authentication.

Figure 5 illustrates the structure of an authentication sub-system 500 of a biometric authentication system according to an exemplary embodiment of the present disclosure. The authentication sub-system 500 can implement the authentication agent 104 of Figure 1.

The authentication sub-system 500 is employed to authenticate any person or user who needs to be authenticated or verified by the biometric authentication system. This is done by the user presenting (1) a live biometric sample of the user for capture by the authentication agent and (2) the encrypted biometric template which is stored in an electronic device associated with the user during enrollment of the user. The authentication sub-system 500 does not store any biometric information; and it does not retrieve any reference biometric template from another module of the biometric authentication system via network during authentication, thus making the system secure, hacking-proof, and standalone.

As can be seen from Figure 5, the authentication sub-system 500 includes a biometric information acquisition and process unit 501, a security unit 502, an authentication action unit 503, and a communication unit 504. The security unit 502 is connected to all other units. The communication unit 504 communicates with the external electronic device (not shown) to obtain or retrieve the stored encrypted biometric template. The security unit 502 can pre-load the public keys and the UID to public key mapping from the authentication service provision module (not shown) via a mobile secure memory storage or via network (also not shown).

The biometric information acquisition and process unit 501 is employed to acquire the live biometric sample from the person or user who needs to be authenticated by the authentication sub-system 500 into a live biometric template. In one embodiment, the processing in the biometric information acquisition and process unit 501 is based on the approach one described above, in conjunction with Figures 1-2.

The person also carries with him/her the electronic device that is external to the authentication sub-system 500 and that stores the encrypted biometric template of the user during the prior enrollment phase. The encrypted biometric template is acquired from the external electronic device by the communication unit 504. In one embodiment, the communication unit 504 employs NFC communication technology to receive the stored encrypted biometric template appended with UID from the external electronic device. Both the live biometric template and the encrypted biometric template from the external electronic device are sent to the security unit 502.

The security unit 502 first receives the UID information associated with the stored encrypted biometric template. The security unit 502 then obtains the corresponding public key based on the UID to decrypt the encrypted data. The public key is selected from the UID to public key mapping which is transferred from the authentication service provision module (e.g., the module 101 of Figure 1).

The security unit 502 then decrypts the stored encrypted biometric template with the selected public key, and obtains the UID, custom information, as well as the original converted results during the enrollment (i.e., HASH_01). The security unit 502 also irreversibly converts the live biometric template into a converted live biometric template (i.e., HASH_02) using the same irreversible conversion or calculation function (e.g. hash function) during the enrollment.

Both the converted biometric template (HASH_01) and the converted live biometric template (HASH_02) are then analyzed at the authentication unit 503 to make an authentication decision. The authentication action unit 503 will do the different actions (e.g. open the door, trigger the alarm, etc.) according to the authentication decision and the custom information decrypted from the encrypted biometric template.

As described above, there is a possibility that even for the same valid user, the biometric samples respectively captured or acquired during the enrollment phase and the authentication phase can be slightly different, which result in the converted biometric template to be different from the converted live biometric template. As a result, different approaches (i.e., approach one and approach two) can be employed reduce the likelihood of false mismatch. As described above, the first approach (i.e., approach one) deals with forming the biometric template with only limited and highly discriminative biometric characteristics that are most likely to be accurately acquired by biometric scanning equipment using some fuzzy mechanisms. This can significantly increase the probability that the two acquired biometric templates during the enrollment and authentication are identical. Approach two deals with using special hash functions to only convert localized special hashing scheme is employed to generate a set of localized hashed biometric minutia data based on the captured biometric information. Authentication decision can be made according to a match score which is estimated by analyzing and comparing a set of localized hashes which correspond to the localized sets of biometric minutia (in this case, the converted biometric template and the converted live biometric template are respectively a set of localized hash data). Thus, the authentication action unit 504 makes the matching decision based on the different approaches described above.

The security unit 502 receives the encryption public keys and the UID to public key mapping lists from the authentication service provision module (e.g., the module 101 of Figure 1 or the sub-system 300 of Figure 3). In one embodiment, this information is transferred via secure mobile memory storage from the external authentication service provision module, and preloaded or pre-installed into the security unit 502 such that the authentication sub-system 500 can operate in a standalone fashion without the need to be connected to the authentication service provision module during operation. This also makes the system secure and hacking-proof. In another embodiment, the information (encryption public keys and the UID to public key mapping lists) can be updated periodically (e.g. update once per-month, or per-year) from the authentication service provision module to security unit 502 via secure networks.

As described above, the external electronic device (not shown in Figure 5) can be an electronic device (e.g., a smart phone, a tablet, a computer, an electronic watch, a digital camera, or a personal digital assistant), a data processing device, or a badge (or a card) with an embedded IC chip or microchip. The electronic device can also be a smart card. In one embodiment, the external electronic device is an electronic device (e.g., a smart phone, a tablet, a digital camera, or a computer system) with biometric information acquisition means. In this case, the unit 501 of the authentication sub-system 500 can be implemented in the electronic device. In another embodiment, the electronic device is a badge (or a card) with an embedded IC chip or microchip, or a smart card. In this case, all the units 501-504 of the sub-system 500 are not implemented in the external electronic device.

Figure 6 illustrates a biometric authentication enrollment procedure according to an exemplary embodiment of the present disclosure. The procedure shown in Figure 6 may be performed by an authentication enrollment sub-system (e.g., the enrollment agent 103 of Figure 1 or the enrollment sub-system 400 of Figure 4).

As can be seen from Figure 6, the procedure starts at 600, at which the authentication enrollment sub-system acquires or receives a biometric sample from a person who will need to be authenticated by the authentication system later.

At 601, the authentication enrollment sub-system assigns a user ID (identification) to the user and associate this UID to this captured biometric sample.

At 602, the authentication enrollment sub-system converts the acquired biometric sample into a biometric template.

At 603, the authentication enrollment sub-system irreversibly converts the biometric template into a converted biometric template (i.e., HASH_01) using a predetermined irreversible conversion function. The processing at 600-603 can be optionally based on the two approaches (i.e., approach one and approach two) described above.

At 604, the authentication enrollment sub-system adds or appends the UID (i.e., user ID) and custom information to the converted biometric template (now Data 02). The custom information is optional and is used to specify access privileges associated with the user ID. The custom information can include, for example, access conditions, access period window information, and other user-specific information.

At 605, the appended data (i.e., Data 02) is encrypted by the authentication enrollment sub-system using a private key associated with the user ID (now Data 03). The selection of the private key based on the user ID is referred to as private key mapping.

At 606, the encrypted data (i.e., Data 03) is added with the user ID again as Data 04.

At 607, the authentication enrollment sub-system communicates the Data 04 to an external electronic device associated with the person for storing in the external electronic device. This communication can be done using many different communication techniques (e.g., wired or wireless). In one embodiment, the communication technique employed to communicate the Data 04 to the external electronic device is NFC wireless communication. In this case, the external electronic device is an NFC-enabled device. This completes the enrollment phase and the procedure ends at 608. The stored Data 04 in the external electronic device can be later accessed for authenticating the person during an authentication phase. This completes the enrollment phase and the procedure ends at 608.

Figure 7 illustrates a biometric authentication procedure according to an exemplary embodiment of the present disclosure. The procedure shown in Figure 7 may be performed by an authentication sub-system (e.g., the authentication agent 104 of Figure 1 or the authentication sub-system 500 of Figure 5).

As can be seen from Figure 7, the procedure can start with two different threads, either sequentially or simultaneously. One thread starts at 700 while the other starts at 704. The two threads merge at 707.

At 700, the authentication sub-system receives an encrypted biometric template (i.e., referred to as Data 04 from the above description with respect to Figure 6) from an external electronic device. The electronic device is associated with the person to be authenticated by the authentication sub-system. The authentication sub-system receives the Data 04 from the external electronic device when the person needing to be authenticated by the authentication sub-system connects the external electronic device with the authentication sub-system. Such connection can be wired or wireless. In one embodiment, the connection to communicate the Data 04 from the external electronic device to the authentication sub-system is NFC wireless communication. In this case, the external electronic device is an NFC-enabled device (e.g. NFC tag or NFC enabled smartphone) and the authentication sub-system is also NFC-enabled and includes a NFC receiver or reader module. In another embodiment, the communication between external electronic device and the authentication sub-system can be via other wireless technologies such like infrared, Bluetooth, Wi-Fi, etc.

At 701, the authentication sub-system obtains the user ID from the Data 04, selects the corresponding public key based on the user ID to decrypt the Data 04. The selection of the public key is based on the UID to public key mapping lists.

At 702, the authentication sub-system removes the user ID information from the Data 04. The data is now turned to be the Data 03. The authentication sub-system then decrypts the Data 03 using the public key corresponding to the user ID obtained in Data 04. If the decrypted result is not valid, the authentication will fail. The decryption of Data 03 should reveal a user ID, custom information, and a converted biometric template (HASH_01).

At 703, the authentication sub-system separates the user ID, custom information, and the converted biometric template (HASH_01). If the decryption result is not valid, authentication is declared as failed. If the User ID is not valid, authentication is declared as failed too. If failed, then procedure moves to 710.

At 704, the live biometric sample of the person to be verified by the authentication sub-system is again acquired in live in the authentication sub-system.

At 705, the authentication sub-system converts the live biometric sample into a live biometric template.

At 706, the authentication sub-system uses the same irreversible calculation used in enrollment to irreversibly convert the live biometric template, and turns the live biometric template into a converted live biometric template (i.e., HASH_02). The processing at 704-706 can be optionally based on the two approaches (i.e., approach one and approach two) described above.

At 707, the authentication sub-system compares and analyzes the converted biometric template (HASH_01) and the converted live biometric template (HASH_02) to see if they belong to the same person (i.e., match). As described above, especially with respect to Figures 4-5, even for the same valid user, the biometric samples respectively captured or acquired during the enrollment phase and the authentication phase can be slightly different, which result in the converted biometric template to be different from the converted live biometric template. Thus, the authentication sub-system makes the matching decision based on the two approaches (i.e., approach one and approach two) described above. In one embodiment, the biometric sample and the live biometric sample are processed using fuzzy mechanism before they are turned into converted biometric template and the converted live biometric template respectively. In this case and as described above, only limited and highly discriminative biometric characteristics which are most likely to be accurately acquired by biometric acquisition equipment are used to generate the biometric templates. In this case, the authentication sub-system only needs to match the highly discriminative biometric characteristics, which in most cases eliminates the possibility of no match for the valid user. In another embodiment, special hashing scheme is employed to irreversibly convert biometric minutia information contained in biometric template and the live biometric template into a set of localized converted biometric minutia data, respectively. In this case, the authentication sub-system compares the localized biometric minutia data of the biometric template and the live biometric template to generate a comparison score. If the score exceeds a predetermined threshold, then the two templates are declared to be matching.

If at 708, it is determined that there is a match (i.e., the person is authenticated or verified), then block 709 is performed, at which the authentication sub-system outputs its authentication indication. If at 708, it is determined that there is no match (i.e., the person cannot be authenticated or verified), then block 710 is performed, at which the authentication sub-system notifies an authentication failure.

Service provider is able to identify and track a valid user's authentication history via the UID (obtained at 703) which is protected by service provider's private key and can be retrieved during the authentication phase.

According to service provider's requirement, M (M∈ [1, +∞ [) pairs of private/public keys can be generated, each private/public key pair can be flexibly assigned for: each user; or for N users, or for users in one or several specific authentication agent site(s), or for users in specific group(s), or for all the enrolled users, etc. Module 101 can flexibly define the mappings between User IDs and encryption keys.

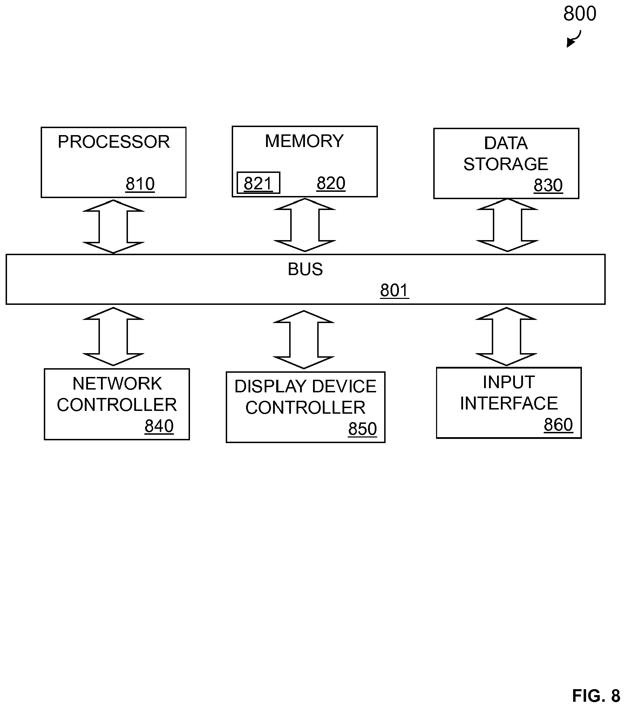

Figure 8 is a block diagram of an exemplary computer system 800 in which an example embodiment of the present disclosure resides. The computer system 800 includes a processor 810 that process data signals. The processor 810 can represent a number of physically separated processors. The processor 810 is connected to a bus 801 or other switch fabric that transmits data signals between the processor 810 and other components in the computer system 800. The computer system 800 includes a memory 820. The memory 820 stores instructions and code represented by data signals that may be executed by the processor 810. In one embodiment, the memory 820 represents a number of physically separated memories. A data storage device 830 is also connected to the bus 801

A network controller 840 is connected to the bus 801. The network controller 840 may link the computer system 800 to a network of computers (not shown) and supports communication among the machines. A display device controller 850 is connected to the bus 801. The display device controller 850 allows coupling of a display device (not shown) to the computer system 800 and acts as an interface between the display device and the computer system 800. An input interface 860 is connected to the bus 801. The input interface 860 allows coupling of an input device (not shown) to the computer system 800 and transmits data signals from the input device to the computer system 800.

A biometric authentication system 821 may reside in the memory 820 and be executed by the processor 810. The biometric authentication system 821 may be the biometric authentication system 100 of Figure 1 when implemented in software form.

Figures 2 and 6-7 are flow charts illustrating procedures or functions according to embodiments of the present disclosure. The techniques illustrated in these figures may be performed sequentially, in parallel or in an order other than what is described. The techniques may be also be performed once or more times. It should be appreciated that not all of the techniques described are required to be performed, that additional techniques may be added, and that some of the illustrated techniques may be substituted with other techniques.

Embodiments of the present disclosure may be provided as a computer program product, or software, that may include an article of manufacture on a machine accessible or machine readable medium having instructions. The instructions on the machine accessible or machine readable medium may be used to program a computer system or other electronic device. The machine-readable medium may include, but is not limited to, floppy diskettes, optical disks, CD-ROMs, and magneto-optical disks or other type of media/machine-readable medium suitable for storing or transmitting electronic instructions. The techniques described herein are not limited to any particular software configuration. They may find applicability in any computing or processing environment. The terms "machine accessible medium" or "machine readable medium" used herein shall include any medium that is capable of storing, or encoding a sequence of instructions for execution by the machine and that cause the machine to perform any one of the methods described herein. Furthermore, it is common in the art to speak of software, in one form or another (e.g., code, program, procedure, process, application, module, unit, logic, block, and so on) as taking an action or causing a result. Such expressions are merely a shorthand way of stating that the execution of the software by a processing system causes the processor to perform an action to produce a result.

The following examples pertain to further embodiments. In one embodiment, a computer-implemented method of providing secure and standalone-operable biometric authentication includes capturing, at an enrollment agent, a biometric sample from a person into a biometric template. The biometric template is irreversibly converted, at the enrollment agent using a pre-determined irreversible conversion function, into a converted biometric template. The converted biometric template is then stored in an electronic device of the person. The person is authenticated, at an authentication agent, by (1) capturing a new biometric sample from the person and irreversibly converting, using the same irreversible conversion function during enrollment, the new live biometric sample into a converted live biometric template, (2) obtaining the converted biometric template from the electronic device, and (3) analyzing the converted biometric templates to determine if they belong to the same person.

In another embodiment, the irreversibly converting further includes assigning a user identification number (UID) to the biometric template, mapping a pre-determined private encryption key to the UID to form a UID to private key mapping, encrypting, using the private encryption key, the converted biometric template, and appending the encrypted and converted biometric template with the UID.

In a further embodiment, the above-referenced method further includes pre-loading the pre-determined private key and the UID to encryption key mapping into the enrollment agent.

In a further embodiment, the storing further includes encrypting the converted biometric template using a private key that is assigned uniquely to the biometric template prior to storing the converted biometric template into the electronic device.

In a further embodiment, the authenticating the person further includes decrypting the encrypted converted biometric template obtained from the electronic device using a public key of the private key.

In a further embodiment, the above-referenced method further includes processing the biometric sample and the new biometric sample using a fuzzy function prior to converting them into biometric templates.

In a further embodiment, the irreversibly converting converts a localized set of biometric minutia of each of the biometric sample and the new biometric sample such that each of the converted biometric template and the converted live biometric template includes a set of localized conversion data, wherein the method further includes determining if the converted live biometric template matches with the stored and converted biometric template by comparing the localized conversion data of the biometric templates to obtain a matching score and determining if the matching score exceeds a pre-determined threshold.

In a further embodiment, the electronic device is one of a (1) NFC-enabled (Near Field Communication) device, (2) an infrared-enabled device, (3) a Bluetooth-enabled device, and (4) a Wi-Fi-enabled device.

In a further embodiment, a non-transitory computer-readable medium includes sequences of instructions which, when executed, cause a processor to provide secure and standalone-operable biometric authentication that includes capturing, at an enrollment agent, a biometric sample from a person into a biometric template. The biometric template is irreversibly converted, at the enrollment agent using a pre-determined irreversible conversion function, into a converted biometric template. The converted biometric template is then stored in an electronic device of the person. The person can be then authenticated, at an authentication agent, by (1) capturing a new biometric sample from the person and irreversibly converting, using the same irreversible conversion function during enrollment, the new live biometric sample into a converted live biometric template, (2) obtaining the converted biometric template from the electronic device, and (3) analyzing the converted biometric templates to determine if they belong to the same person.

In a further embodiment, the storing further includes encrypting the converted biometric template using a private key that is assigned uniquely to the biometric template prior to storing the converted biometric template into the electronic device.

In a further embodiment, the above-mentioned non-transitory computer-readable medium further includes pre-loading the pre-determined private key into the enrollment agent.

In a further embodiment, the authenticating the person further includes decrypting the encrypted converted biometric template obtained from the electronic device using a public key of the private key.

In a further embodiment, the above-mentioned non-transitory computer-readable medium further includes processing the biometric sample and the new biometric sample using a fuzzy function prior to converting them into biometric templates.

In a further embodiment, the irreversibly converting converts a localized set of biometric minutia of each of the biometric sample and the new biometric sample such that each of the converted biometric templates includes a set of localized conversion data, wherein the authenticating the person further includes determining if the converted live biometric template and the stored and converted biometric template belong to the same person by comparing the localized hash data of the biometric templates to obtain a matching score and determining if the matching score exceeds a pre-determined threshold.

In a further embodiment, the electronic device is one of a (1) NFC-enabled (Near Field Communication) device, (2) an infrared-enabled device, (3) a Bluetooth-enabled device, and (4) a Wi-Fi-enabled device.

In a further embodiment, a secure and standalone-operable biometric authentication system includes an authentication enrollment sub-system to enroll a person by (1) capturing a biometric sample from the person into a biometric template, (2) irreversibly converting, using a pre-determined irreversible conversion function, the biometric template into a converted biometric template and (3) storing the converted biometric template in an electronic device of the person. An authentication sub-system is provided to authenticate the person by (1) capturing a new biometric sample from the person, (2) irreversibly converting, using the same irreversible conversion function during enrollment, the new live biometric sample into a converted live biometric template, (3) obtaining the converted biometric template from the electronic device, and (4) analyzing the converted biometric templates to determine if they belong to the same person.

In a further embodiment, the enrollment sub-system encrypts the converted biometric template using a predetermined private key prior to storing the converted biometric template into the electronic device while the authentication sub-system uses a public key of the private key to decrypt the stored encrypted biometric template obtained from the electronic device during authentication.

In a further embodiment, the above-mentioned system further includes an authentication service provision sub-system that (1) pre-loads the predetermined private key mapped to a user ID assigned to the encrypted and converted biometric template into the enrollment sub-system, and (2) pre-loads the predetermined public key mapped to the same user ID assigned to the encrypted and converted biometric template into the authentication sub-system.

In a further embodiment, each of the enrollment sub-system and the authentication sub-system further includes a communication module to communicate with the external electronic device using one of (1) Near Field Communication, (2) infrared communication, (3) Bluetooth communication, and (4) a Wi-Fi communication.

In a further embodiment, the above-mentioned system further includes an authentication service provision sub-system that generates the predetermined public and private keys, pairs them together, and maps the keys to a user ID assigned to the converted biometric template, and a network coupled to the authentication service provision sub-system and the enrollment and authentication sub-systems to allow for the authentication service provision sub-system to transfer the predetermined public and private keys to the enrollment and authentication sub-systems.

In a further embodiment, each of the enrollment and authentication sub-systems further includes a biometric information acquisition module to acquire the biometric samples into the biometric template and the live biometric template, and a security module to irreversibly convert one of the biometric templates.

In a further embodiment, an apparatus for providing secure and standalone-operable biometric authentication includes means for capturing, at an enrollment agent, a biometric sample from a person into a biometric template; means for irreversibly converting, at the enrollment agent using a pre-determined irreversible conversion function, the biometric template into a converted biometric template; means for storing the converted biometric template in an electronic device of the person; and means for authenticating, at an authentication agent, the person by (1) capturing a new biometric sample from the person and irreversibly converting, using the same irreversible conversion function during enrollment, the new live biometric sample into a converted live biometric template, (2) obtaining the converted biometric template from the electronic device, and (3) analyzing the converted biometric templates to determine if they belong to the same person.

In a further embodiment, the means for irreversibly converting further includes means for encrypting the converted biometric template using a predetermined private key, wherein the means for authenticating further includes means for decrypting the encrypted converted biometric template obtained from the electronic device using a public key of the private key.

In a further embodiment, the above-mentioned apparatus further includes means for generating the public and private keys and means for preloading the public key into the means for decrypting and the private key into the means for encrypting.

In a further embodiment, the above-mentioned apparatus further includes means for assigning a user identification number (UID) to the biometric template; means for generating a public and private key pair that includes the private key and the corresponding public key; means for mapping the public and private key pair to the UID to form a UID to private key mapping and a UID to public key mapping; and means for (1) sending the UID to private key mapping and the private key to the means for irreversibly converting and (2) sending the UID to public key mapping and the public key to the means for authenticating.

While the disclosure has been illustrated and described in detail in the drawings and foregoing description, such an illustration and description are to be regarded as exemplary and not restrictive. It should be understood that only illustrative embodiments of the disclosure have been shown and described. The invention as defined by the appended claims.

## Claims

1. A computer-implemented method of providing secure and standalone-operable biometric authentication, comprising:
capturing (600, 602) a biometric sample from a person into a biometric template at an enrollment agent;
irreversibly converting (603) the biometric template into a converted biometric template at the enrollment agent using a pre-determined irreversible conversion function;
encrypting (605) the converted biometric template using a private key that is assigned uniquely to the biometric template;
storing (607) the encrypted converted biometric template in an electronic device of the person; and
authenticating the person at an authentication agent by capturing (704, 705) a new biometric sample from the person and irreversibly converting (706), using the same irreversible conversion function during enrollment, the new live biometric sample into a converted live biometric template, obtaining (700) the encrypted converted biometric template from the electronic device and decrypting (702) the encrypted converted biometric template obtained from the electronic device using a public key of the private key, and analyzing (707-710) the converted biometric templates to determine if they belong to the same person.

2. The method of claim 1, wherein the irreversibly converting further comprises
assigning (601) a user identification number, UID, to the biometric template;
mapping a pre-determined private encryption key to the UID to form a UID to private key mapping;
encrypting (605), using the private encryption key, the converted biometric template; and
appending (606) the encrypted and converted biometric template with the UID.

3. The method of claim 2, further comprising pre-loading the pre-determined private key and the UID to private key mapping into the enrollment agent.

4. The method of claim 1, further comprising processing the biometric sample and the new biometric sample using a fuzzy function prior to converting them into biometric templates.

5. The method of claim 1, wherein the irreversibly converting converts a localized set of biometric minutia of each of the biometric sample and the new biometric sample such that each of the converted biometric template and the converted live biometric template includes a set of localized conversion data, wherein the method further comprises determining if the converted live biometric template matches with the stored and converted biometric template by comparing the localized conversion data of the biometric templates to obtain a matching score and determining if the matching score exceeds a pre-determined threshold.

6. The method of claim 1, wherein the electronic device is one of a NFC-enabled, Near Field Communication, device, an infrared-enabled device, a Bluetooth-enabled device, and a Wi-Fi-enabled device.

7. A non-transitory computer-readable medium having sequences of instructions, the sequences of instructions including instructions which, when executed, cause a processor to provide secure and standalone-operable biometric authentication, comprising:
capturing a biometric sample from a person into a biometric template at an enrollment agent;
irreversibly converting the biometric template into a converted biometric template at the enrollment agent using a pre-determined irreversible conversion function,
encrypting the converted biometric template using a private key that is assigned uniquely to the biometric template;
storing the encrypted converted biometric template in an electronic device of the person; and
authenticating the person at an authentication agent by capturing a new biometric sample from the person and irreversibly converting, using the same irreversible conversion function during enrollment, the new live biometric sample into a converted live biometric template, obtaining the encrypted converted biometric template from the electronic device and decrypting the encrypted converted biometric template obtained from the electronic device using a public key of the private key, and analyzing the converted biometric templates to determine if they belong to the same person.

8. The non-transitory computer-readable medium of claim 7, further comprising pre-loading the pre-determined private key into the enrollment agent.

9. The non-transitory computer-readable medium of claim 7, further comprising processing the biometric sample and the new biometric sample using a fuzzy function prior to converting them into biometric templates.

10. The non-transitory computer-readable medium of claim 7, wherein the irreversibly converting converts a localized set of biometric minutia of each of the biometric sample and the new biometric sample such that each of the converted biometric template and the converted live biometric template includes a set of localized conversion data, wherein the authenticating the person further comprises determining if the converted live biometric template and the stored and converted biometric template belong to the same person by comparing the localized hash data of the biometric templates to obtain a matching score and determining if the matching score exceeds a pre-determined threshold.

11. The non-transitory computer-readable medium of claim 7, wherein the electronic device is one of a NFC-enabled, Near Field Communication, device, an infrared-enabled device, a Bluetooth-enabled device, and a Wi-Fi-enabled device.

12. A secure and standalone-operable biometric authentication system (100), comprising:
an authentication enrollment sub-system (103, 400) configured to enroll a person by capturing a biometric sample from the person into a biometric template, irreversibly converting, using a pre-determined irreversible conversion function, the biometric template into a converted biometric template, encrypting the converted biometric template using a predetermined private key that is assigned uniquely to the biometric template and storing the encrypted converted biometric template in an electronic device of the person; and
an authentication sub-system (104, 500) configured to authenticate the person by capturing a new biometric sample from the person, irreversibly converting, using the same irreversible conversion function during enrollment, the new live biometric sample into a converted live biometric template, obtaining the encrypted converted biometric template from the electronic device and using a public key of the private key to decrypt the stored encrypted biometric template obtained from the electronic device, and analyzing the converted biometric templates to determine if they belong to the same person.

13. The system of claim 12, further comprising an authentication service provision sub-system (101, 300) configured to pre-load the predetermined private key mapped to a user ID assigned to the encrypted and converted biometric template into the enrollment sub-system, and to pre-load the predetermined public key mapped to the same user ID assigned to the encrypted and converted biometric template into the authentication sub-system.

14. The system of claim 12, wherein each of the enrollment sub-system and the authentication sub-system further comprising a communication module (403, 504) configured to communicate with the external electronic device using one of Near Field Communication, infrared communication, Bluetooth communication, and a Wi-Fi communication.

15. The system of claim 12, further comprising
an authentication service provision sub-system (101, 300) configured to generate the predetermined
public and private keys, pair them together, and to map the keys to a user ID assigned to the converted biometric template; and
a network coupled to the authentication service provision sub-system and the enrollment and authentication sub-systems to allow for the authentication service provision sub-system to transfer the predetermined public and private keys to the enrollment and authentication sub-systems.

16. The system of claim 12, wherein each of the enrollment and authentication sub-systems further comprises
a biometric information acquisition module (401, 501) configured to acquire the biometric samples into the biometric template and the live biometric template; and
a security module (402, 502) configured to irreversibly convert one of the biometric templates.

## Patentansprüche

1. Computerimplementiertes Verfahren zur Bereitstellung einer sicheren und eigenständig betreibbaren biometrische Authentifizierung, umfassend:
Erfassen (600, 602) einer biometrischen Probe einer Person in ein biometrisches Muster an einem Registrierungs-Agenten;
unwiderrufliches Umwandeln (603) des biometrischen Musters in ein umgewandeltes biometrisches Muster am Registrierungs-Agenten unter Verwendung einer vorher festgelegten unwiderruflichen Umwandlungsfunktion;
Verschlüsseln (605) des umgewandelten biometrischen Musters unter Verwendung eines privaten Schlüssels, der dem biometrischen Muster eindeutig zugewiesen ist;
Speichern (607) des verschlüsselten umgewandelten biometrischen Musters in einer elektronischen Vorrichtung der Person; und
Authentifizieren der Person an einem Authentifizierungs-Agenten durch Erfassen (704, 705) einer neuen biometrischen Probe von der Person und unwiderrufliches Umwandeln (706), unter Verwendung derselben unwiderruflichen Umwandlungsfunktion wie bei der Registrierung, der neuen aktiven biometrischen Probe in ein umgewandeltes aktives biometrisches Muster, Einholen (700) des verschlüsselten umgewandelten biometrischen Musters von der elektronischen Vorrichtung und Entschlüsseln (702) des von der elektronischen Vorrichtung eingeholten verschlüsselten umgewandelten biometrischen Musters unter Verwendung eines öffentlichen Schlüssels des privaten Schlüssels, und Analysieren (707 - 710) der umgewandelten biometrischen Muster, um zu ermitteln, ob diese zur selben Person gehören.

2. Verfahren nach Anspruch 1, wobei das unwiderrufliche Umwandeln ferner umfasst
Zuweisen (601) einer Benutzeridentifikationsnummer, UID, zum biometrischen Muster;
Zuordnen eines vorher festgelegten privaten Verschlüsselungsschlüssels zur UID, um eine UID zur privaten Schlüsselzuordnung zu bilden;
Verschlüsseln (605), unter Verwendung des privaten Verschlüsselungsschlüssels, des umgewandelten biometrischen Musters; und
Anhängen (606) des verschlüsselten und umgewandelten biometrischen Musters mit der UID.

3. Verfahren nach Anspruch 2, ferner umfassend Vorladen des vorher festgelegten privaten Schlüssels und der UID zur privaten Schlüsselzuordnung in den Registrierungs-Agenten.

4. Verfahren nach Anspruch 1, ferner umfassend Verarbeiten der biometrischen Probe und der neuen biometrischen Probe unter Verwendung einer unscharfen Funktion (fuzzy function) vor dem Umwandeln derselben in biometrische Muster.

5. Verfahren nach Anspruch 1, wobei das unwiderrufliche Umwandeln einen lokalisierten Satz biometrischer Details sowohl der biometrischen Probe als auch der neuen biometrischen Probe derart umwandelt, dass sowohl das umgewandelte biometrische Muster als auch das umgewandelte aktive biometrische Muster einen Satz lokalisierter Umwandlungsdaten aufweisen, wobei das Verfahren ferner das Ermitteln, ob das umgewandelte aktive biometrische Muster mit dem gespeicherten und umgewandelten biometrischen Muster übereinstimmt durch Vergleichen der lokalisierten Umwandlungsdaten der biometrischen Muster, umfasst, um ein Übereinstimmungsergebnis zu erlangen und das Ermitteln, ob das Übereinstimmungsergebnis einen vorher festgelegten Grenzwert übersteigt.

6. Verfahren nach Anspruch 1, wobei die elektronische Vorrichtung entweder eine NFC-fähige, Nahfeldkommunikations-, Vorrichtung und/oder eine infrarotfähige Vorrichtung und/oder eine Bluetooth-fähige Vorrichtung und/oder eine Wi-Fi-fähige Vorrichtung ist.

7. Nichtflüchtiges computer-lesbares Medium aufweisend Befehlsfolgen, die Befehlsfolgen aufweisend Befehle, die bei ihrer Ausführung einen Prozessor veranlassen, eine sichere und eigenständig betreibbare biometrische Authentifizierung bereitzustellen, umfassend:
Erfassen einer biometrischen Probe einer Person in ein biometrisches Muster an einem Registrierungs-Agenten;
unwiderrufliches Umwandeln des biometrischen Musters in ein umgewandeltes biometrisches Muster am Registrierungs-Agenten unter Verwendung einer vorher festgelegten unwiderruflichen Umwandlungsfunktion;
Verschlüsseln des umgewandelten biometrischen Musters unter Verwendung eines privaten Schlüssels, der dem biometrischen Muster eindeutig zugewiesen ist;
Speichern des verschlüsselten umgewandelten biometrischen Musters in einer elektronischen Vorrichtung der Person; und
Authentifizieren der Person an einem Authentifizierungs-Agent durch Erfassen einer neuen biometrischen Probe von der Person und unwiderrufliches Umwandeln, unter Verwendung derselben unwiderruflichen Umwandlungsfunktion wie bei der Registrierung, der neuen aktiven biometrischen Probe in ein umgewandeltes aktives biometrisches Muster, Einholen des verschlüsselten umgewandelten biometrischen Musters von der elektronischen Vorrichtung und Entschlüsseln des von der elektronischen Vorrichtung eingeholten verschlüsselten umgewandelten biometrischen Musters unter Verwendung eines öffentlichen Schlüssels des privaten Schlüssels, und Analysieren der umgewandelten biometrischen Muster, um zu ermitteln, ob diese zur selben Person gehören.

8. Nichtflüchtiges computer-lesbares Medium nach Anspruch 7, ferner umfassend Vorladen des vorher festgelegten privaten Schlüssels in den Registrierungs-Agenten.

9. Nichtflüchtiges computerlesbares Medium nach Anspruch 7, ferner umfassend Verarbeiten der biometrischen Probe und der neuen biometrischen Probe unter Verwendung einer unscharfen Funktion (fuzzy function) vor dem Umwandeln derselben in biometrische Muster.

10. Nichtflüchtiges computerlesbares Medium nach Anspruch 7, wobei das unwiderrufliche Umwandeln einen lokalisierten Satz biometrischer Details sowohl der biometrischen Probe als auch der neuen biometrischen Probe derart umwandelt, dass sowohl das umgewandelte biometrische Muster als auch das umgewandelte aktive biometrische Muster einen Satz lokalisierter Umwandlungsdaten aufweisen, wobei das Authentifizieren der Person ferner das Ermitteln, ob das umgewandelte aktive biometrische Muster mit dem gespeicherten und umgewandelten biometrischen Muster übereinstimmt durch Vergleichen der lokalisierten Hash-Daten der biometrischen Muster, umfasst, um ein Übereinstimmungsergebnis zu erlangen und zu ermitteln, ob das Übereinstimmungsergebnis einen vorher festgelegten Grenzwert übersteigt.

11. Nichtflüchtiges computerlesbares Medium nach Anspruch 7, wobei die elektronische Vorrichtung entweder eine NFC-fähige, Nahfeldkommunikations-, Vorrichtung und/oder eine infrarotfähige Vorrichtung und/oder eine Bluetooth-fähige Vorrichtung und/oder eine Wi-Fi-fähige Vorrichtung ist.

12. Sicheres und eigenständig betreibbares Authentifizierungssystem (100) umfassend:
ein Authentifizierungs-Registrierungs-Untersystem (103, 400), das dafür ausgelegt ist, eine Person zu registrieren durch Erfassen einer biometrischen Probe von der Person in ein biometrisches Muster, das biometrische Muster unter Verwendung einer vorher festgelegten unwiderruflichen Umwandlungsfunktion unwiderruflich in ein umgewandeltes biometrisches Muster umzuwandeln, das umgewandelte biometrische Muster unter Verwendung eines vorher festgelegten privaten Schlüssels, der dem biometrischen Muster eindeutig zugewiesen ist, zu verschlüsseln, und das verschlüsselte umgewandelte biometrische Muster in einer elektronischen Vorrichtung der Person zu speichern; und
ein Authentifizierungs-Untersystem (104, 500), das dafür ausgelegt ist, die Person zu authentifizieren durch Erfassen einer neuen biometrischen Probe von der Person, unwiderrufliches Umwandeln, unter Verwendung derselben unwiderruflichen Umwandlungsfunktion wie bei der Registrierung, der neuen aktiven biometrischen Probe in ein umgewandeltes aktives biometrisches Muster, Einholen des verschlüsselten umgewandelten biometrischen Musters von der elektronischen Vorrichtung, und Verwenden eines öffentlichen Schlüssels des privaten Schlüssels, um das von der elektronischen Vorrichtung eingeholte gespeicherte verschlüsselte biometrische Muster zu entschlüsseln, und Analysieren der umgewandelten biometrischen Muster, um zu ermitteln, ob diese zur selben Person gehören.

13. System nach Anspruch 12, ferner umfassend ein Untersystem (101, 300) zur Erbringung einer Authentifizierungsdienstleistung, das dafür ausgelegt ist, den vorher festgelegten privaten Schlüssel, der einer Benutzeridentifizierung, welche dem verschlüsselten und umgewandelten biometrischen Muster zugewiesen ist, zugeordnet ist, in das Registrierungs-Untersystem vorzuladen, und den vorher festgelegten öffentlichen Schlüssel, welcher derselben Benutzeridentifizierung, die dem verschlüsselten und umgewandelten biometrischen Muster zugewiesen ist, zugeordnet ist, in das Authentifizierungs-Untersystem vorzuladen.

14. System nach Anspruch 12, wobei sowohl das Registrierungs-Untersystem als auch das Authentifizierungs-Untersystem ferner ein Kommunikationsmodul (403, 504), das dafür ausgelegt ist, unter Verwendung von Nahfeldkommunikation und/oder Infrarotkommunikation und/oder Bluetooth-Kommunikation und/oder einer Wi-Fi-Kommunikation mit der externen elektronischen Vorrichtung zu kommunizieren, umfassen.

15. System nach Anspruch 12, ferner umfassend ein Untersystem (101, 300) zur Erbringung einer Authentifizierungsdienstleistung, das dafür ausgelegt ist, die vorher festgelegten öffentlichen und privaten Schlüssel zu erzeugen, sie zusammenzuführen, und die Schlüssel einer Benutzeridentifizierung, die dem umgewandelten biometrischen Muster zugewiesen sind, zuzuordnen; und
ein Netzwerk, das mit dem Untersystem zur Erbringung einer Authentifizierungsdienstleistung und den Registrierungs- und Authentifizierungs-Untersystemen verbunden ist, um dem Untersystem zur Erbringung einer Authentifizierungsdienstleistung zu ermöglichen, die vorher festgelegten öffentlichen und privaten Schlüssel zu den Registrierungs- und Authentifizierungs-Untersystemen zu übertragen.

16. System nach Anspruch 12, wobei sowohl das Registrierung-Untersystem als auch das Authentifizierungs-Untersystem ferner umfassen
ein biometrisches Informationserfassungsmodul (401, 501), das dafür ausgelegt ist, die biometrischen Proben in das biometrische Muster und das aktive biometrische Muster zu erfassen; und
ein Sicherheitsmodul (402, 502), das dafür ausgelegt ist, eines der biometrischen Muster unwiderruflich umzuwandeln.

## Revendications

1. Procédé mis en oeuvre par ordinateur de fourniture d'une authentification biométrique sécurisée et autonome consistant :
à capturer (600, 602) un échantillon biométrique provenant d'une personne dans un modèle biométrique au niveau d'un agent d'inscription ;
à convertir de manière irréversible (603) le modèle biométrique en un modèle biométrique converti au niveau de l'agent d'inscription à l'aide d'une fonction de conversion irréversible prédéterminée ;
à crypter (605) le modèle biométrique converti à l'aide d'une clé privée qui est attribuée uniquement au modèle biométrique ;
à stocker (607) le modèle biométrique converti crypté dans un dispositif électronique de la personne ; et
à authentifier la personne au niveau d'un agent d'authentification en capturant (704, 705) un nouvel échantillon biométrique provenant de la personne et en convertissant de manière irréversible (706), à l'aide de la même fonction de conversion irréversible pendant l'inscription, le nouvel échantillon biométrique vivant en un modèle biométrique vivant converti, en obtenant (700) le modèle biométrique converti crypté à partir du dispositif électronique et en décryptant (702) le modèle biométrique converti crypté obtenu à partir du dispositif électronique à l'aide d'une clé publique de la clé privée, et en analysant (707 à 710) les modèles biométriques convertis pour déterminer s'ils appartiennent, ou non, à la même personne.

2. Procédé selon la revendication 1, dans lequel la conversion irréversible consiste en outre :
à attribuer (601) un numéro d'identification d'utilisateur (UID) au modèle biométrique ;
à mettre en correspondance une clé de cryptage privée prédéterminée avec le numéro UID pour former un numéro UID pour une mise en correspondance de clé privée ;
à crypter (605), à l'aide de la clé de cryptage privée, le modèle biométrique converti ; et
à ajouter (606) le modèle biométrique converti et crypté ayant le numéro UID.

3. Procédé selon la revendication 2, consistant en outre à précharger la clé privée prédéterminée et le numéro UID pour une mise en correspondance de clé privée dans l'agent d'inscription.

4. Procédé selon la revendication 1, consistant en outre à traiter l'échantillon biométrique et le nouvel échantillon biométrique à l'aide d'une fonction floue avant de les convertir en modèles biométriques.

5. Procédé selon la revendication 1, dans lequel la conversion irréversible convertit un ensemble localisé de points caractéristiques biométriques de chacun de l'échantillon biométrique et du nouvel échantillon biométrique de telle sorte que le modèle biométrique converti et le modèle biométrique vivant converti comprennent un ensemble de données de conversion localisées, dans lequel le procédé consiste en outre à déterminer si le modèle biométrique vivant converti correspond au modèle biométrique converti et stocké en comparant les données de conversion localisées des modèles biométriques pour obtenir un score de mise en correspondance et à déterminer si le score de mise en correspondance est supérieur à un seuil prédéterminé.

6. Procédé selon la revendication 1, dans lequel le dispositif électronique est soit un dispositif compatible avec une communication en champ proche (NFC), soit un dispositif compatible avec l'infrarouge, soit un dispositif compatible avec Bluetooth, soit un dispositif compatible avec le Wi-Fi.

7. Support non transitoire lisible par ordinateur ayant des séquences d'instructions, les séquences d'instructions comprenant des instructions qui, lorsqu'elles sont exécutées, contraignent un processeur à fournir une authentification biométrique sécurisée et autonome, consistant :
à capturer un échantillon biométrique provenant d'une personne dans un modèle biométrique au niveau d'un agent d'inscription ;
à convertir de manière irréversible le modèle biométrique en un modèle biométrique converti au niveau de l'agent d'inscription à l'aide d'une fonction de conversion irréversible prédéterminée ;
à crypter le modèle biométrique converti à l'aide d'une clé privée qui est attribuée uniquement au modèle biométrique ;
à stocker le modèle biométrique converti crypté dans un dispositif électronique de la personne ; et
à authentifier la personne au niveau d'un agent d'authentification en capturant un nouvel échantillon biométrique provenant de la personne et en convertissant de manière irréversible, à l'aide de la même fonction de conversion irréversible pendant l'inscription, le nouvel échantillon biométrique vivant en un modèle biométrique vivant converti, en obtenant le modèle biométrique converti crypté à partir du dispositif électronique et en décryptant le modèle biométrique converti crypté obtenu à partir du dispositif électronique à l'aide d'une clé publique de la clé privée, et en analysant les modèles biométriques convertis pour déterminer s'ils appartiennent, ou non, à la même personne.

8. Support non transitoire lisible par ordinateur selon la revendication 7, comprenant en outre le préchargement de la clé privée prédéterminée dans l'agent d'inscription.

9. Support non transitoire lisible par ordinateur selon la revendication 7, comprenant en outre le traitement de l'échantillon biométrique et du nouvel échantillon biométrique à l'aide d'une fonction floue avant de les convertir en modèles biométriques.

10. Support non transitoire lisible par ordinateur selon la revendication 7, dans lequel la conversion irréversible convertit un ensemble localisé de points caractéristiques biométriques de chacun de l'échantillon biométrique et du nouvel échantillon biométrique de telle sorte que le modèle biométrique converti et le modèle biométrique vivant converti comprennent un ensemble de données de conversion localisées, dans lequel l'authentification de la personne consiste en outre à déterminer si le modèle biométrique vivant converti et le modèle biométrique converti et stocké appartiennent, ou non, à la même personne en comparant les données de hachage localisées des modèles biométriques pour obtenir un score de mise en correspondance et à déterminer si le score de mise en correspondance est supérieur à un seuil prédéterminé.

11. Support non transitoire lisible par ordinateur selon la revendication 7, dans lequel le dispositif électronique est soit un dispositif compatible avec une communication en champ proche (NFC), soit un dispositif compatible avec l'infrarouge, soit un dispositif compatible avec Bluetooth, soit un dispositif compatible avec le Wi-Fi.

12. Système d'authentification biométrique sécurisée et autonome (100) comprenant :
un sous-système d'inscription à une authentification (103, 400) configuré pour inscrire une personne en capturant un échantillon biométrique provenant de la personne dans un modèle biométrique, en convertissant de manière irréversible, à l'aide d'une fonction de conversion irréversible prédéterminée, le modèle biométrique en un modèle biométrique converti, en cryptant le modèle biométrique converti à l'aide d'une clé privée prédéterminée qui est attribuée uniquement au modèle biométrique et en stockant le modèle biométrique converti crypté dans un dispositif électronique de la personne ; et
un sous-système d'authentification (104, 500) configuré pour authentifier la personne en capturant un nouvel échantillon biométrique provenant de la personne, en convertissant de manière irréversible, à l'aide de la même fonction de conversion irréversible pendant l'inscription, le nouvel échantillon biométrique vivant en un modèle biométrique vivant converti, en obtenant le modèle biométrique converti crypté à partir du dispositif électronique et en utilisant une clé publique de la clé privée pour décrypter le modèle biométrique converti crypté stocké obtenu à partir du dispositif électronique et en analysant les modèles biométriques convertis pour déterminer s'ils appartiennent, ou non, à la même personne.

13. Système selon la revendication 12, comprenant en outre un sous-système de fourniture de service d'authentification (101, 300) configuré pour précharger la clé privée prédéterminée mise en correspondance avec un identifiant (ID) d'utilisateur attribué au modèle biométrique converti et crypté dans le sous-système d'inscription et pour précharger la clé publique prédéterminée mise en correspondance avec le même identifiant d'utilisateur attribué au modèle biométrique converti et crypté dans le sous-système d'authentification.

14. Système selon la revendication 12, dans lequel le sous-système d'inscription et le sous-système d'authentification comprennent en outre un module de communication (403, 504) configuré pour communiquer avec le dispositif électronique externe à l'aide soit d'une communication en champ proche, soit d'une communication infrarouge, soit d'une communication Bluetooth, soit d'une communication Wi-Fi.

15. Système selon la revendication 12, comprenant en outre
un sous-système de fourniture de service d'authentification (101, 300) configuré pour générer les clés publique et privée prédéterminée, pour les apparier et pour mettre en correspondance les clés avec un identifiant d'utilisateur attribué au modèle biométrique converti ; et
un réseau couplé au sous-système de fourniture de service d'authentification et aux sous-systèmes d'inscription et d'authentification pour permettre au sous-système de fourniture de service d'authentification de transférer les clés publique et privée prédéterminées aux sous-systèmes d'inscription et d'authentification.

16. Système selon la revendication 12, dans lequel chacun des sous-systèmes d'inscription et d'authentification comprend en outre
un module d'acquisition d'informations biométriques (401, 501) configuré pour acquérir les échantillons biométriques dans le modèle biométrique et le modèle biométrique vivant ; et
un module de sécurité (402, 502) configuré pour convertir de manière irréversible l'un des modèles biométriques.
